# FASCICULE DE BREVET EUROPEEN

(11) **EP 1 160 432 B1**
(45) Date de publication et mention de la délivrance du brevet: **08.07.2009**
(21) Numéro de dépôt: 00870117.9
(22) Date de dépôt: 31.05.2000
(51) Int. Cl.: F02C 3/14, F01D 1/24, F23R 3/54, F23R 3/40, F23C 6/04, F23R 3/34

(54) **Turboréacteur**
Gasturbinentriebwerk
Gas turbine engine

(43) Date de publication de la demande: 05.12.2001
(73) Titulaire: Bregentzer, Daniel, 1150 Bruxelles (BE)
(72) Inventeur: Bregentzer, Daniel, 1150 Bruxelles (BE)
(74) Mandataire: Powis de Tenbossche, Roland

(56) Documents cités:
- US-A- 3 691 766
- US-A- 4 168 609
- US-A- 5 177 956
- US-A- 5 473 881

## Description

La présente invention a pour objet un turboréacteur.

On connaît par le document GB-A-650,661 un turboréacteur comprenant au moins un compresseur aspirant et comprimant de l'air de manière à former au moins un flux principal d'air comprimé, une ou des chambres de combustion, au moins un moyen pour amener un carburant dans la ou les chambres de combustion, au moins un moyen pour amener un comburant dans la ou les chambres de combustion, et au moins une turbine recevant les gaz de combustion de la ou des chambres de combustion, entraînant le compresseur et suivie d'une tuyère de détente.

Dans ce turboréacteur connu, le flux principal d'air du compresseur sert essentiellement à la combustion du carburant et il est introduit dans la ou les chambres de combustion que fortement ralenti et perturbé avant de servir au brassage nécessaire à la combustion complète et de passer au travers de la turbine.
La nécessaire perturbation du flux principal est requise pour assurer un mélange sensiblement homogène avec le carburant, un accrochage et un maintien de la flamme, une progression complète de la combustion, tout en assurant une température admissible pour les parois de(s) la chambre(s) et pour la (les) turbines.

Pour pallier ces inconvénients, le turboréacteur suivant l'invention comporte au moins une préchambre de combustion comportant un moyen ou des moyens d'amenée d'un comburant et d'un carburant.

Par le document US-A-4168 609, on connaît un turboréacteur comprenant :
- un compresseur aspirant et comprimant de l'ai de manière à former au moins un flux principal d'air comprimé,
- une chambre de combustion, et
- une turbine recevant les gaz de combustion de la chambre de combustion.
Le turboréacteur comporte :
- une préchambre de combustion comportant un moyen d'amenée d'un carburant, et un moyen pour amener les gaz de combustion de la préchambre dans la chambre de combustion, et
- un moyen pour diriger au moins une partie du flux principal d'air comprimé provenant du compresseur dans la chambre de combustion. Ledit moyen est agencé par rapport au moyen d'amenée des gaz de combustion de la préchambre dans la chambre de combustion de manière à ce qu'au moins une partie du flux principal d'air comprimé provenant du compresseur dirigée dans la chambre de combustion crée une aspiration des gaz de combustion de la préchambre pour assurer dans ladite chambre de combustion une combustion complémentaire du carburant non brûlé dans la préchambre.

Dans le turboréacteur selon ce document, il n'est pas prévu de moyens assurant un passage de gaz de la chambre vers la préchambre, pour assurer un apport en air et un brassage de l'air, des gaz avec le carburant dans la préchambre.

Le turboréacteur de l'invention est un turboréacteur comprenant un compresseur aspirant et comprimant de l'air de manière à former au moins un flux principal d'air comprimé, une ou des chambres de combustion, et au moins une turbine recevant les gaz de combustion de la chambre de combustion, dans lequel le turboréacteur comporte une ou des préchambres de combustion comportant un moyen ou des moyens d'amenée d'un comburant et d'un carburant, et un moyen pour amener les gaz de combustion de la ou les préchambres dans une ou des chambres de combustion, ainsi qu'un moyen pour diriger au moins une partie du flux principal d'air comprimé provenant du compresseur dans la, des ou les chambres de combustion, ledit moyen étant agencé par rapport au moyen d'amenée des gaz de combustion de la ou les préchambres dans la, des ou les chambres de combustion de manière à ce qu'au moins une partie du flux principal d'air comprimé provenant du compresseur dirigée dans la, des ou les chambres de combustion crée une aspiration des gaz de combustion de la ou les préchambre pour assurer dans ladite ou lesdites chambres de combustion une combustion complémentaire, de façon avantageuse sensiblement complète, du carburant non brûlé dans la ou les préchambres, cette aspiration étant avantageusement combinée avec un mélange des gaz de combustion avec une partie du flux principal d'air comprimé dans la, des ou les chambres de combustion,
caractérisé en ce qu'il présente des moyens assurant un passage de gaz de la ou les chambres vers la préchambre, lesdits moyens étant agencés pour que des gaz de la ou les chambres entrent dans la ou les préchambres entre le moyen d'amenée de carburant dans la ou les préchambres et les moyens, faisant avantageusement partie de la ou les préchambres, qui amènent les gaz de combustion de la ou les préchambres dans la ou les chambres de combustion et/ou des moyens assurant un passage d'air comprimé du compresseur directement vers la ou les préchambres, en particulier vers une partie de la ou les préchambres adjacente du moyen d'amenée de carburant.

Il est clair que le turboréacteur peut comprendre une ou plusieurs préchambres de combustion associées à une ou plusieurs chambres de combustion. Ainsi, par exemple, le turboréacteur comprend plusieurs préchambres de combustion distinctes, dont les gaz de combustion sont amenés dans une même chambre de combustion, et/ou plusieurs préchambres de combustion distinctes, dont les gaz de combustion sont amenés dans plusieurs chambres de combustion distinctes, en particulier dont les gaz de combustion de chaque préchambre sont amenés dans une chambre de combustion distincte. Dans le présent mémoire, « la préchambre » désigne donc une ou plusieurs préchambres distinctes, en particulier disposées en parallèle, tandis que « la chambre de combustion » désigne une ou plusieurs chambres distinctes, en particulier disposées en parallèle.

De façon avantageuse, le compresseur et/ou le moyen pour diriger au moins une partie du flux principal d'air comprimé provenant du compresseur dans la chambre de combustion sont agencés pour assurer une vitesse pour cette partie du flux principal introduit dans la chambre au moins supérieure à la vitesse des gaz sortant de la préchambre, de façon avantageuse au moins deux fois supérieure à la vitesse des gaz sortant de la préchambre, de préférence au moins cinq fois supérieure à la vitesse des gaz sortant de la préchambre, et pour assurer une mise en dépression de la préchambre par rapport à la chambre, en particulier par rapport à son entourage ou voisinage et à la chambre de combustion.

Avantageusement le moyen dirigeant au moins une partie du flux principal d'air comprimé provenant du compresseur est constitué par une paroi du moyen assurant le passage des gaz de la préchambre dans la chambre ou par une paroi associée au moyen assurant le passage des gaz de la préchambre dans la chambre.

De façon avantageuse, le moyen pour diriger au moins une partie du flux principal d'air comprimé provenant du compresseur dans la chambre de combustion est agencé pour que sensiblement tout le flux d'air comprimé sortant du compresseur est amené à passer au travers de la chambre de combustion sensiblement sans perturbation significative de sa vitesse et de sa direction. Cette forme de réalisation est avantageuse, car elle permet de réduire la perte de charge lors du passage de l'air et des gaz dans l'ensemble des moyens nécessaires à la combustion, pertes de charge qui sont loin d'être négligeables dans les chambres de combustion classiques. Par exemple, la vitesse du flux principal d'air comprimé traversant la chambre de combustion est au moins égale à 75% de la vitesse initiale du flux principal entrant dans la chambre de combustion, en particulier au moins égale à 85% de la vitesse initiale du flux principal entrant dans la chambre de combustion, de préférence sensiblement égale à la vitesse initiale du flux principal entrant dans la chambre de combustion.

Selon une forme de réalisation avantageuse, par rapport à la position du moyen (faisant avantageusement partie de la préchambre) qui amène des gaz de combustion de la préchambre à la chambre de combustion, les moyens d'amenée de carburant et de comburant dans la préchambre sont plus proches de la turbine du turboréacteur ou sont plus éloignés du compresseur. En d'autre termes, la préchambre avec ses moyens d'amenée de carburant et de comburant est agencée de manière avantageuse pour que le flux de gaz de combustion dans la préchambre soit essentiellement à contre-courant par rapport au flux de gaz dans la chambre de combustion. Cette forme de réalisation est avantageuse car elle permet d'avoir un encombrement axial ou longitudinal réduit assurant malgré tout les diverses phases essentielles du processus, à savoir injection, mélange carburant-comburant, allumage, brassage, précombustion et combustion.

Dans le turboréacteur suivant l'invention, on peut utiliser en tant que carburant des carburants du type liquide, tels qu'essence, pétrole, kérosène, etc., ainsi que des carburants gazeux tels que méthane, etc. Dans le cas de l'utilisation de carburant du type liquide, il est avantageux que l'amenée soit réalisée au moyen d'un conduit en contact avec une partie ou zone chaude du turboréacteur pour assurer une vaporisation naturelle du carburant au moment de son injection dans la préchambre.

En tant que comburant, on utilise avantageusement de l'air du compresseur et/ou de l'air comprimé extérieur (ne provenant pas du compresseur du turboréacteur) et/ou tout autre comburant approprié. En particulier, pour la combustion dans la préchambre, on utilise, partiellement ou complètement, de l'air provenant directement du compresseur et/ou de l'air provenant du flux principal d'air comprimé après son passage préalable dans la chambre de combustion. De l'air provenant du compresseur peut être amené dans la préchambre sans passer par la chambre de combustion, cet air étant par exemple principalement amené par un ou des conduits ou orifices, avantageusement sensiblement adjacents à l'axe du turboréacteur, à la préchambre par les flancs de la préchambre tournés vers l'axe du turboréacteur et/ou sur la face avant de la préchambre (face tournée vers le compresseur) et/ou par la face arrière ou le fond de la préchambre.

Selon une forme de réalisation possible, le turboréacteur suivant l'invention présente des moyens assurant un passage d'air comprimé provenant du compresseur dans la préchambre, lesdits moyens étant adaptés pour que le rapport flux d'air comprimé provenant du compresseur introduit dans la préchambre/flux d'air comprimé provenant du compresseur introduit dans la chambre est inférieur à 1/5, avantageusement inférieur à 1/8, de préférence inférieur à 1/10, de façon encore plus préférée moins de 1/20. Le rapport sera ajusté selon les besoins, en particulier en fonction de la température maximale admissible dans la turbine.

Selon un détail d'une forme de réalisation préférentielle, le turboréacteur présente des moyens assurant un passage de gaz de la chambre vers la préchambre, lesdits moyens étant agencés pour que des gaz de la chambre entrent dans la préchambre entre le moyen d'amenée de carburant dans la préchambre et les moyens pour amener les gaz de combustion de la préchambre dans la chambre de combustion.

Le passage de gaz de la chambre de combustion vers la préchambre et/ou le passage d'air directement du compresseur dans la préchambre permet d'assurer la précombustion par un meilleur brassage carburant-comburant dans la préchambre et/ou par l'augmentation progressive de la proportion d'air dans le processus de précombustion.

Selon un autre détail avantageux, les moyens (qui forment avantageusement une paroi de la préchambre) amenant les gaz de combustion de la préchambre dans la chambre de combustion comportent ou forment des moyens divisant le flux d'air comprimé amont (provenant du compresseur) en un premier flux entrant dans la chambre et en un deuxième flux alimentant la préchambre par des orifices de son enveloppe, ledit deuxième flux ayant un débit inférieur au premier flux, en particulier nettement inférieur au premier flux permettant à la préchambre d'avoir un volume réduit. La préchambre comporte avantageusement des moyens pour amener ledit deuxième flux ou une partie de celui-ci notamment dans un ou des ou ses moyens pour amener les gaz de combustion de la préchambre vers la chambre de combustion pour l'alimenter ou les alimenter en comburant.

De préférence, le ou les moyens partageant les deux flux d'air est adapté pour que le rapport deuxième flux/premier flux est inférieur à 1 : 5, de façon avantageuse inférieur à 1 : 8, de préférence inférieur à 1 : 10, en particulier inférieur à 1 : 20.

Il s'est également avéré avantageux que ce ou ces moyens amènent de l'air comprimé dans la préchambre ou dans sa partie formant le moyen guidant les gaz de combustion de la préchambre dans la chambre. Cet apport en air assure un brassage de l'air et des gaz avec le carburant et permet ainsi la précombustion. Le moyen amenant l'air comprimé est ou forme par exemple un ou des injecteurs d'air comprimé extérieur ou un ou des orifices percés sur les diverses faces de l'enveloppe de la préchambre. De par la dépression créée dans la préchambre par la puissance ou vitesse relative du flux principal d'air comprimé, de l'air comprimé du compresseur est aspiré au travers un ou des orifices percés dans l'enveloppe de la préchambre.

Dans le cas ou le turboréacteur est muni de moyens assurant le passage de gaz de la chambre vers la préchambre, il est avantageux que ces moyens soient agencés pour ne pas être situés dans le sillage (ou prolongement) du flux de gaz sortant du moyen de la préchambre guidant les gaz de la préchambre dans la chambre de combustion. Ceci permet d'assurer que les gaz de la chambre passant dans la préchambre ne contiennent que peu de gaz de combustion ou soient constitués essentiellement d'air provenant du flux principal du compresseur.

Selon un détail d'une forme de réalisation avantageuse, au moins une partie de la préchambre, en particulier au moins une partie de son moyen guidant ses gaz de combustion de la préchambre vers la chambre de combustion comporte au moins un revêtement contenant au moins un catalyseur de combustion.

Selon une caractéristique avantageuse du turboréacteur, le compresseur comporte un stator au moins partiellement rotatif (par exemple complètement rotatif), en particulier contrarotatif (par exemple totalement contrarotatif). Selon une forme de réalisation possible, le stator comporte une section fixe et une section rotative, en particulier contrarotative, cette section mobile du stator étant reliée à une turbine qui lui est propre. La paroi extérieure du stator rotatif, en particulier contrarotatif, est éventuellement solidarisée à un rotor de compresseur auxiliaire ou à une soufflante auxiliaire ou à des éléments formant un compresseur ou soufflante auxiliaire. Ce compresseur ou soufflante auxiliaire forme un compresseur ou soufflante extérieur, avantageusement placé dans les limites axiales ou longitudinales du compresseur principal pour assurer un encombrement longitudinal réduit, l'air sortant du compresseur auxiliaire ou de la soufflante auxiliaire servant avantageusement à diluer les gaz éjectés du corps central du turbo permettant ainsi une amélioration du rendement de propulsion.

Selon un détail d'un turboréacteur suivant l'invention, le compresseur comporte un stator muni d'aubes et un rotor muni d'aubes, le rotor et/ou le stator comprenant une couche en matière thermoplastique ou est réalisé en une matière thermoplastique, dans laquelle sont engagées les bases d'aubes réalisées en matière conductrice de la chaleur, en particulier en métal ou en tout alliage de métaux convenant pour la réalisation d'aubes de compresseur et aptes à adhérer à la matière thermoplastique.

L'invention a encore pour objet un turboréacteur selon la revendication 1, dans lequel le compresseur comporte un stator et un rotor (rotatif par rapport au stator et au bâti du turboréacteur), le stator étant au moins partiellement rotatif (par exemple totalement rotatif) par rapport au bâti et au moins partiellement contrarotatif par rapport au rotor. Ceci permet d'avoir une compression plus importante ou moins importante de l'air sortant du compresseur, tout en n'exigeant pas de vitesses de rotation trop importantes pour le compresseur et sa turbine, en permettant également de réduire le nombre d'étages du compresseur et donc son encombrement. La portion rotative du stator est reliée à une turbine qui lui est propre. Ce turboréacteur comprend une enveloppe, un compresseur aspirant et comprimant de l'air de manière à former au moins un flux principal d'air comprimé, une chambre de combustion, au moins un moyen pour amener un carburant dans la chambre de combustion, au moins un moyen pour amener un comburant dans la chambre de combustion, et au moins une turbine à deux étages recevant les gaz de combustion de la chambre de combustion, dans lequel le compresseur comporte un stator (en tout ou en partie rotatif par rapport à l'enveloppe), et un rotor (rotatif par rapport au stator), la partie rotative du stator étant reliée à un ou plusieurs étages de la turbine, tandis que le rotor est relié à un ou plusieurs autres étages de la turbine. Le ou les étages de la turbine reliés au stator rotatif et le ou les étages de la turbine reliés au rotor sont agencés de manière à ce que le stator soit contrarotatif par rapport au rotor. Avantageusement la partie rotative du stator est solidaire d'une soufflante ou constitue la corps du rotor d'un compresseur auxiliaire sur sa face tournée vers l'enveloppe pour créer un flux d'air à l'extérieur et/ou le long de la paroi de l'enveloppe, supplémentaire au flux principal auquel il se mélange ultérieurement pour améliorer le rendement propulsif de l'ensemble tout en maintenant l'encombrement longitudinal ou axial du compresseur principal.

Encore un autre objet selon l'invention est un procédé de fixation de pièces conductrices de la chaleur dans une couche thermoplastique, en particulier pour fabriquer des pièces munies d'aubes ou de ailettes et plus spécifiquement pour fabriquer un rotor et/ou un stator d'un compresseur.

Ce procédé destiné à fixer au moins une extrémité d'une pièce conductrice de la chaleur dans une couche thermoplastique consiste à chauffer au moins l'extrémité de la pièce à une température supérieure à la température de ramollissement, de préférence supérieure à la température de fusion de la matière thermoplastique, et à exercer un effort de pression entre la pièce et la couche pour que l'extrémité de la pièce pénètre dans la couche thermoplastique. En particulier, on chauffe l'extrémité de la pièce à une température de 10à 50°C supérieure à la température de fusion de la matière thermoplastique, sans atteindre un état de carbonisation (par exemple en restant en dessous de la température de carbonisation ou en chauffant pendant un temps très court à une température au dessus de la température de carbonisation).

On prévoit avantageusement des cavités ou des gorges ou des trous aux endroits où une extrémité d'une pièce doit être insérée. Les cavités, gorges ou trous sont adaptés pour recevoir de la matière thermoplastique ramollie ou en fusion et la partie de la pièce à insérer, lors de la pénétration de la pièce dans la couche thermoplastique. En particulier, les cavités, gorges ou trous présentent une chambre adaptée pour recevoir de la matière thermoplastique ramollie ou en fusion et la partie de la pièce à insérer, lors de la pénétration de la pièce dans la couche thermoplastique.

Pour être insérées, on utilise avantageusement des pièces conductrices de la chaleur ayant un point de ramollissement supérieur à la température de fusion de la couche thermoplastique. En particulier, le point de ramollissement ou de fusion de la pièce conductrice de la chaleur à insérer dans la couche thermoplastique est au moins 100°C supérieur à la température de fusion de la couche thermoplastique.

L'extrémité de la pièce, avantageusement métallique, qui est insérée dans la couche thermoplastique est avantageusement usinée de manière à ce que cette extrémité présente une partie de moindre section que le corps de la pièce, notamment pour son chauffage ou pour son positionnement.

Au lieu d'utiliser une matrice d'injection complexe avec inserts, ou de procéder au chauffage local de la couche en matière thermoplastique par le moyen et l'application complexe des ultrasons, il est avantageusement procédé au chauffage de la pièce ou de l'extrémité de celle-ci par conduction, convection, radiation. De préférence ce chauffage est réalisé par le passage de courant électrique au travers de la pièce.

En particulier, un objet de l'invention est un procédé pour placer des aubes réalisées en matière conductrice de la chaleur sur un stator et/ou un rotor d'un turboréacteur, en particulier d'un turboréacteur suivant l'invention, ce stator et/ou rotor étant muni d'une couche en matière thermoplastique ou réalisé en matière thermoplastique, dans lequel on à chauffe au moins l'extrémité de l'aube à insérer dans la matière plastique à une température supérieure à la température de fusion de la matière thermoplastique, et on exerce un effort de pression entre l'aube et la matière thermoplastique pour que l'extrémité de l'aube pénètre dans la matière thermoplastique.

Outre la simplicité du procédé, cette disposition permet également de constituer tout ou partie du corps du rotor du compresseur en un matériau léger permettant de ne pas atteindre trop tôt une de ses vitesses critiques de rotation et lui permettant donc de pouvoir tourner plus rapidement.
De préférence, on chauffe l'extrémité de la pièce à une température de 10 à 50°C supérieure à la température de fusion de la matière thermoplastique, sans atteindre un état de carbonisation (température inférieure à la température de carbonisation ou chauffage pendant un temps très court au dessus de la température de carbonisation). De façon avantageuse, on forme préalablement dans la matière thermoplastique des cavités ou des gorges ou des trous aux endroits où une extrémité d'une aube doit être insérée. Les cavités, gorges ou trous sont de préférence adaptés pour recevoir de la matière thermoplastique ramollie ou en fusion, lors de la pénétration de l'aube dans la matière thermoplastique, et servir ainsi d'évents et/ou de moyens de positionnement de l'aube.
Par exemple, les cavités, gorges ou trous présentent une chambre adaptée pour recevoir de le matière thermoplastique ramollie ou en fusion et le restant du corps de la pièce inséré, lors de la pénétration de cette pièce dans la couche thermoplastique. Dans ce procédé, on utilise avantageusement des pièces conductrices de la chaleur ayant un point de ramollissement supérieur à la température de fusion de la couche thermoplastique. En particulier, le point de ramollissement ou de fusion de la pièce conductrice de la chaleur à insérer dans la couche thermoplastique est au moins 100°C supérieur à la température de fusion de la couche thermoplastique.
Selon une variante de ce procédé, l'extrémité de la pièce, avantageusement métallique, qui est insérée dans la couche thermoplastique est avantageusement usinée de manière à ce que cette extrémité présente une partie de moindre section que le corps de la pièce, notamment pour son chauffage ou pour son positionnement.

Des particularités et détails de l'invention ressortiront de la description détaillée suivante dans laquelle il est fait référence aux dessins ci-annexés.

Dans ces dessins,
La figure 1 est une vue schématique en coupe d'un turboréacteur suivant l'invention ;

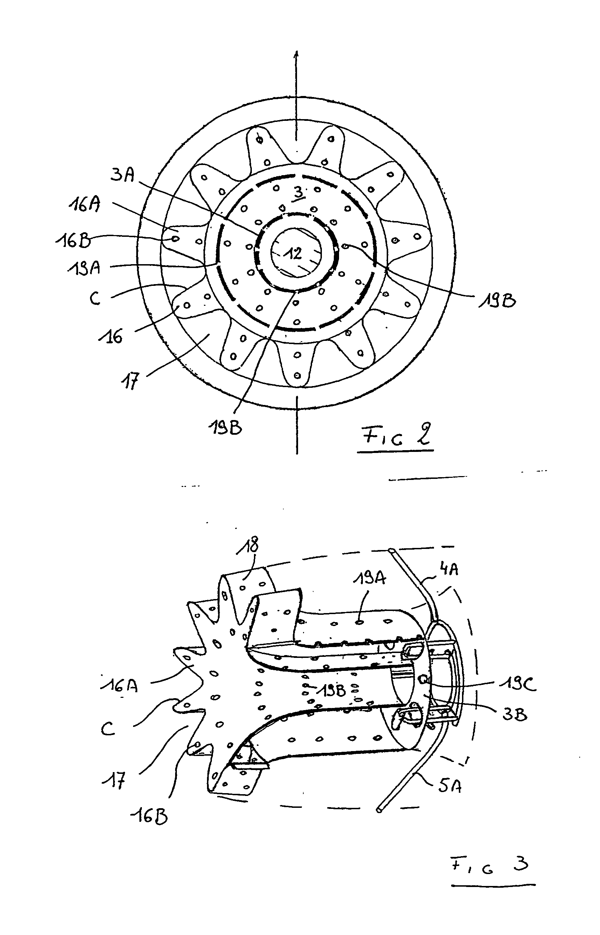

La figure 2 est une vue en coupe selon les lignes II-II du turboréacteur de la figure 1 ;
La figure 3 est une vue en perspective (avec arrachement) de la préchambre de combustion du turboréacteur de la figure 1 ;
La figure 4 est une vue schématique d'une variante du turboréacteur de la figure 1 ;
Les figures 5 à 9 montrent des étapes de fabrication d'un stator et/ou d'un rotor d'un compresseur adapté pour être utilisé dans un turboréacteur.

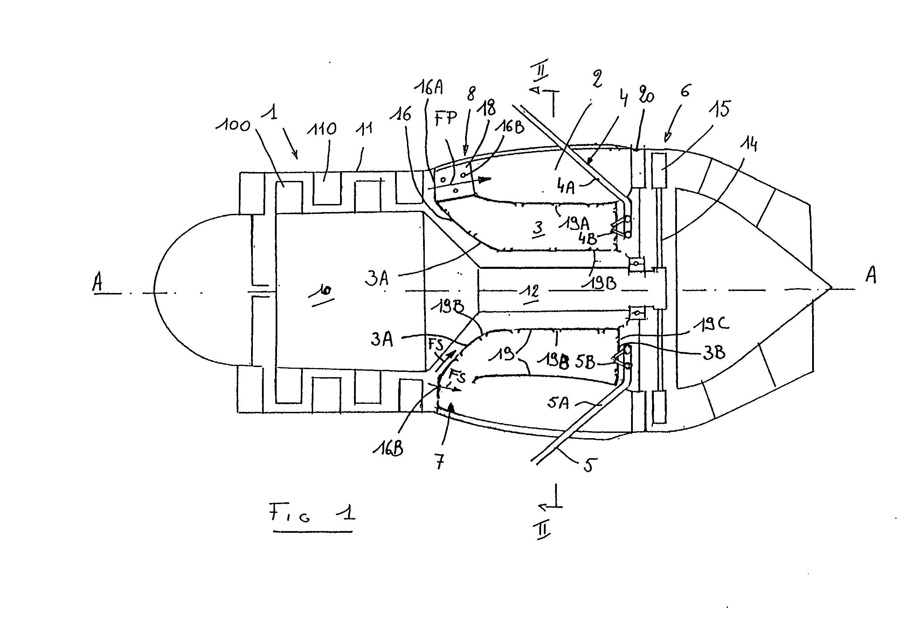

Le turboréacteur de la figure 1 comprend un compresseur 1 aspirant et comprimant de l'air de manière à former au moins un flux principal FP d'air comprimé, une chambre de combustion 2, une préchambre de combustion 3 sensiblement coudée, au moins un moyen 4 pour amener un carburant dans la préchambre de combustion 3, au moins un moyen 5 pour amener un comburant (air ou gaz entourant la préchambre de combustion, éventuellement air comprimé extérieur par exemple) dans la préchambre de combustion 3, un moyen 7 de la préchambre pour amener les gaz de combustion de la préchambre dans la chambre 2, et au moins une turbine 6 recevant les gaz de combustion de la chambre de combustion 2.

La chambre de combustion 2 est associée à un moyen 8 pour recevoir et diriger au moins une partie du flux principal d'air comprimé provenant du compresseur, ledit moyen étant agencé par rapport au moyen de la préchambre amenant les gaz de combustion de la préchambre dans la chambre de combustion de manière à ce que la puissance et la vitesse relative du flux principal d'air comprimé ou de la partie de celui-ci qui est dirigée dans la chambre de combustion crée une forte aspiration des gaz de combustion de la préchambre 3 et un mélange des gaz de combustion de la préchambre avec au moins une partie du flux principal d'air comprimé assurant une combustion du carburant non brûlé dans la préchambre et sa dilution dans l'excès d'air. En fait, la préchambre 3 est mise en dépression par rapport à la chambre de combustion 2.

Dans la forme représentée, le compresseur comporte un rotor 10 muni d'une série d'aubes 100, et un stator 11 comprenant une série d'aubes 110. Le rotor 10 est prolongé par un arbre 12 dont l'extrémité porte un disque 14 muni d'aubes 15, lesdites aubes formant les aubes de la turbine 6. Lors de la mise en rotation de la turbine 6 par les gaz provenant de la chambre de combustion 2, l'arbre 12 est mis en rotation, d'où le rotor 10 tourne par rapport au stator 11. La mise en rotation du rotor 10 entraîne une aspiration d'air et une compression de celui-ci.

L'air comprimé par le compresseur est séparé en un flux principal FP et en un flux secondaire FS. Cette division de l'air comprimé sortant du compresseur est obtenu par la paroi 16 de la préchambre faisant face au compresseur, dont la couronne extérieure est découpée au niveau de la chambre de combustion pour former des dents 16A, deux dents adjacentes étant séparées entre elles par un passage 17. La tranche de la paroi 16 est prolongée vers la turbine 6 par un capotage ou profilé 18 suivant sensiblement la forme du contour extérieur C de la paroi et des dents 16A. La paroi 16 est prolongée par la paroi 3A de la préchambre 3, paroi qui est tournée vers l'axe de rotation A-A du turboréacteur, cette paroi ayant la forme d'un entonnoir. De l'air comprimé du compresseur 1 passe dans le canal central de l'entonnoir dans lequel s'étend l'arbre du rotor 10 pour être amené par des ouvertures 19B et 19C de la paroi 3A et de la paroi arrière ou fond 3B de la préchambre dans la préchambre. L'air comprimé passant par les passages 17 forme le flux principal FP, ce flux principal étant guidé par la surface extérieure du capotage ou profilé 18, avant d'entrer dans la chambre de combustion 2. Les dents 16A (ouvertes pleinement du côté de la chambre de combustion) forment une paroi du moyen 7 guidant les gaz de combustion de la préchambre 3 vers la chambre de combustion, tandis que la face interne du capotage ou profilé 18 forme une autre paroi du moyen 7. Les dents 16A et/ou le profilé 18 présentent une ou des ouvertures 16B permettant un passage d'air comprimé du compresseur 1 dans le moyen 7. Cet air comprimé introduit dans le moyen 7 par les passages 16B, de même que dans les orifices 19A,19B,19C alimente la préchambre en comburant et assure la précombustion.

La préchambre 3 et la chambre 2 sont séparées l'une de l'autre par une paroi 19 sensiblement cylindrique. La paroi 19 présente une série de passages 19A permettant un passage de gaz de la chambre de combustion 2 vers la préchambre 3. Pour assurer que le gaz de la chambre 2 qui est introduit dans la préchambre ait une teneur en oxygène importante ou une teneur en gaz brûlé faible, les passages 19A se trouvent dans le prolongement du flux d'air principal provenant des passages 17.

Le moyen 4 d'amenée du carburant dans la préchambre 3 comporte un tuyau 4A traversant la chambre 2 et se terminant par une rampe d'injection 4B dirigeant le carburant (vaporisable à la sortie de par l'échauffement de celui-ci lors de son passage par le tuyau 4A traversant la chambre 2) vers le moyen 7. Un moyen d'amenée 5 de comburant supplémentaire, tel que de l'air comprimé extérieur au compresseur, comporte par exemple un tuyau 5A traversant la chambre 2 et se terminant par une rampe d'injection 5B dirigeant le comburant vers le moyen 7.

Les gaz sortant de la chambre 2 passent au travers de directrices fixes 20 dirigeant le flux de gaz sur des aubes de la turbine 6 pour assurer sa mise en rotation.

Le flux secondaire d'air comprimé , dans la forme de réalisation représentée, ne correspond qu'à une fraction ou partie du flux principal d'air comprimé.

Au cas où les ouvertures 16B,19A,19B et 19C permettent un apport suffisant d'air ou comburant à la préchambre, il est possible de ne pas devoir utiliser le moyen 5.

Les parois de la préchambre 3 et du moyen 7 sont avantageusement munies en tout ou partie d'un revêtement catalytique assurant une meilleure combustion.

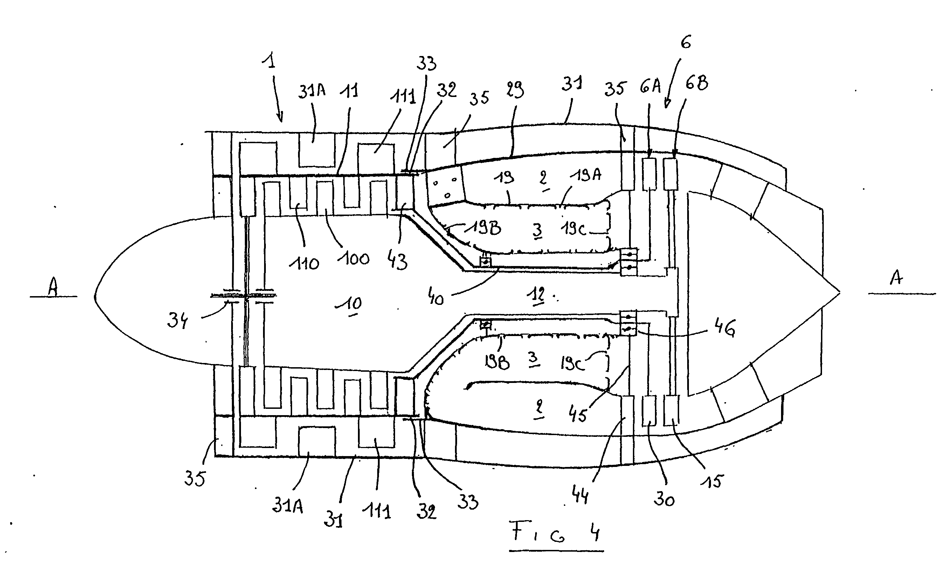

Le turboréacteur de la figure 4 est similaire à celui représenté à la figure 1, si ce n'est que le compresseur 1 comporte un stator totalement contrarotatif 11 entraîné par un étage spécifique 6A (aubes 30) de la turbine 6 et constituant un rotor de compresseur auxiliaire extérieur.

Le turboréacteur comporte une enveloppe extérieure 31 fixe présentant des aubes intérieures 31A. Le stator rotatif 11 présente sur sa face intérieure des aubes 110 travaillant avec les aubes 100 du rotor central 10 pour comprimer de l'air et former les flux d'air principaux. Sur sa face extérieure, le stator 11 présente des aubes 111 qui assure une compression d'un flux extérieur auxiliaire suivant le contour de l'enveloppe 31 du turboréacteur. La chambre de combustion 2 et la préchambre 3 sont solidaires de l'enveloppe 31. Un joint fluide 32 assure une étanchéité entre un anneau 33 solidaire des enveloppes 29 et 31 et le stator rotatif 11.

Des paliers avec systèmes de roulement 34 assurent la rotation autour de l'axe central A, du rotor 10 et du stator 11.

L'enveloppe 31 est solidaire de bras 35 pour supporter la chambre de combustion 2, la préchambre 3, ainsi que des paliers 34.

Le stator est prolongé par une pièce formant un cylindre creux 40 livrant passage à l'arbre 12 du rotor 10. La partie 11 du stator portant les aubes 110 est attachée au cylindre 40 au moyen de bras de liaison 43 servant d'aubages ou directrices assurant le passage d'air du compresseur 1 vers la chambre 2 et vers la préchambre 3 par les ouvertures 19B et 19C.

Avant les aubes 30 de l'étage 6A de la turbine, des directrices 44 solidaires de l'enveloppe 31 via l'enveloppe intérieure 29 assurent une direction optimale des gaz de combustion. Les directrices 44 sont solidaires d'un disque 45 portant un système de roulement 46.

Eventuellement on aurait pu remplacer les aubes 111 et 31A formant un deuxième compresseur par une soufflante.

Dans le turboréacteur de la figure 4, on aurait également pu utiliser un stator partiellement rotatif.

Bien que le stator 11 puisse tourner dans le même sens que le rotor 10, il peut être avantageux d'adapter l'inclinaison des aubes 30 et des aubes 15 des turbines, pour assurer que le stator soit contrarotatif par rapport au rotor augmentant la vitesse relative des aubes stator-rotor, de manière à assurer par exemple une compression plus importante de l'air dans le compresseur 1 ou une réduction du nombre de ses étages nécessaires, diminuant son encombrement axial, soit encore en diminuant les sollicitations mécaniques de rotation du rotor et de sa turbine en modérant la vitesse de rotation nécessaire. L'invention a donc également pour objet un turboréacteur du type décrit dans le premier paragraphe du présent mémoire, mais présentant un stator de compresseur du type décrit pour le turboréacteur de la figure 4.

Le corps du rotor et/ou du stator du compresseur 1 des turboréacteurs montrés aux figures 1 et 4 est avantageusement réalisé au moyen d'une couche en matière thermoplastique 200 dans laquelle sont insérées des aubes 201 en matière conductrices de la chaleur, par exemple des aubes en métal pouvant adhérer à la matière thermoplastique.

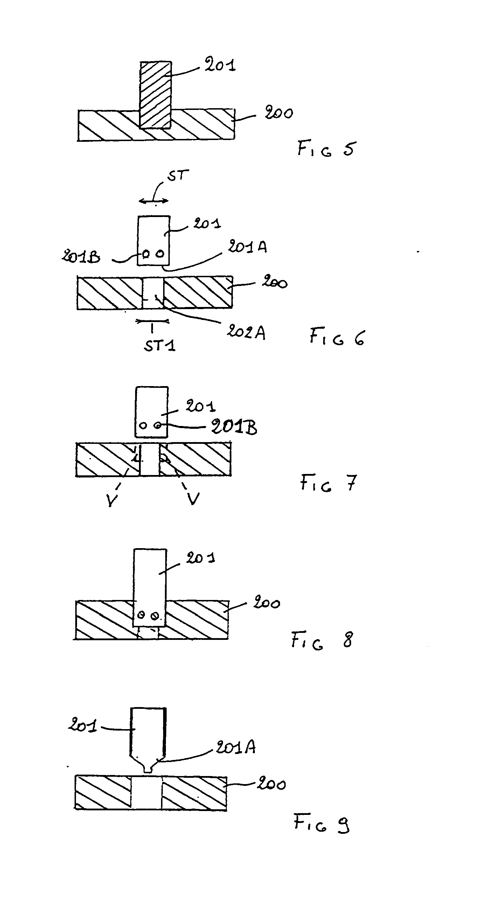

Par exemple le corps du rotor est réalisé en métal ou alliage approprié et est muni d'une couche en matière thermofusible, par exemple en un élastomère thermofusible, en matière thermoplastique éventuellement chargée. Pour le placement des aubes 201, l'extrémité des aubes est chauffée et cette extrémité est poussée (grâce à une pression adaptée) dans la couche 200, soit individuellement, soit par groupes d'aubes au moyen d'équipages appropriés, de manière à ce que cette extrémité soit insérée et bloquée dans la couche 200. (figure 5)

De façon avantageuse, l'opération de pression d'une aube sur la couche 201 a lieu une fois que la température de l'aube ou de l'extrémité de celle-ci qui doit être insérée dans la couche thermofusible est supérieure à la température de fusion de la couche thermofusible, par exemple de 5°C à 50°C supérieure à la température de fusion de la couche thermofusible, mais inférieure à la température de carbonisation.

Pour assurer un enfoncement plus adéquat de l'extrémité 201A de l'aube dans la couche 200, la couche présente avantageusement des cavités 202 ou des trous aux endroits où des aubes doivent être placées. Ces cavités 202 présentent avantageusement une section ou chambre 202A apte à recevoir de la matière en fusion lors de l'insertion de l'extrémité 201A dans la cavité et la partie à insérer du corps de la pièce. La section transversale ST de la pièce 20 lest avantageusement supérieure à celle ST1 de la cavité, tandis que le volume de la chambre 202A correspond avantageusement au volume V de matière fondue nécessaire pour l'insertion correcte de la pièce dans la couche. (figures 6 à 8)

L'extrémité 201A de l'aube qui doit être insérée dans la couche 200 est avantageusement usinée pour assurer un positionnement plus correct de l'aube, en particulier pour éviter la formation de bourrelets trop importants ou pour assurer une évacuation optimale de la matière thermoplastique fondue. (figure 9).

Pour assurer encore une meilleure fixation de la pièce 201, la pièce est avantageusement munie d'un ou de plusieurs trous ou passages ou évidements 201B dans la partie destinée à être insérée dans la couche 200. Ce ou ces trous ou passages permettent à créer un lien en matière thermoplastique s'étendant au travers de la pièce. Ceci est particulièrement avantageux pour des pièces plates à insérer dans la couche 200, par exemple des pièces présentant une épaisseur de moins de 1 cm, avantageusement de moins de 0,5 cm. De préférence, la pièce présente deux ou plus de deux (par exemple trois, quatre, cinq, etc.) trous ou passages dans la partie à insérer dans la couche thermoplastique.

## Revendications

1. Turboréacteur comprenant un compresseur (1) aspirant et comprimant de l'air de manière à former au moins un flux principal (FP) d'air comprimé, une ou des chambres de combustion (2), et au moins une turbine (6) recevant les gaz de combustion de la chambre de combustion, dans lequel le turboréacteur comporte une ou des préchambres de combustion (3) comportant un moyen ou des moyens d'amenée d'un comburant et d'un carburant (4,5), et un moyen (7) pour amener les gaz de combustion de la ou les préchambres dans une ou des chambres de combustion, ainsi qu'un moyen (18) pour diriger au moins une partie du flux principal (FP) d'air comprimé provenant du compresseur (1) dans la, des ou les chambres de combustion, ledit moyen (18) étant agencé par rapport au moyen (7) d'amenée des gaz de combustion de la ou les préchambres (3) dans la, des ou les chambres de combustion (2) de manière à ce qu'au moins une partie du flux principal (FP) d'air comprimé provenant du compresseur (1) dirigée dans la, des ou les chambres de combustion (2) crée une aspiration des gaz de combustion de la ou les préchambres pour assurer dans ladite ou lesdites chambres de combustion (2) une combustion complémentaire, de façon avantageuse sensiblement complète, du carburant non brûlé dans la ou les préchambres (3), cette aspiration étant avantageusement combinée avec un mélange des gaz de combustion avec une partie du flux principal (FP) d'air comprimé dans la, des ou les chambres de combustion (2),
**caractérisé en ce** présente des moyens (19A) assurant un passage de gaz de la ou les chambres (2) vers la ou les préchambres (3), lesdits moyens (19A) étant agencés pour que des gaz de la ou les chambres (2) entrent dans la ou les préchambres (3) entre le moyen d'amenée de carburant (4) dans la ou les préchambres (3) et les moyens (7), faisant avantageusement partie de la ou les préchambres, qui amènent les gaz de combustion de la ou les préchambres (3) dans la ou les chambres de combustion (2) et des moyens (19B,19C) assurant un passage d'air comprimé du compresseur directement vers la ou les préchambres, en particulier vers une partie de la ou les préchambres adjacente du moyen d'amenée de carburant.

2. Turboréacteur suivant la revendication 1, **caractérisé en ce que** le compresseur et/ou le moyen pour diriger au moins une partie du flux principal d'air comprimé provenant du compresseur dans la ou les chambres de combustion sont agencés pour assurer une vitesse pour la partie du flux principal introduit dans la ou les chambres au moins supérieure à la vitesse des gaz sortant de la ou les préchambres, de façon avantageuse au moins deux fois supérieure à la vitesse des gaz sortant de la ou les préchambres, de préférence au moins cinq fois supérieure à la vitesse des gaz, sortant de la ou les préchambres, et pour assurer une mise en dépression de la ou les préchambres par rapport au moins à la ou les chambres, de préférence par rapport à la ou les chambres et à son entourage.

3. Turboréacteur selon la revendication 1, **caractérisé en ce que**, par rapport à la position du moyen (7) d'amenée des gaz de combustion de la ou les préchambres (3) à la ou les chambres de combustion (2), les moyens d'amenée de carburant et de comburant (4,5) dans la ou les préchambres (3) sont plus proches de la turbine (6) du turboréacteur ou sont plus éloignés du compresseur (1).

4. Turboréacteur selon l'une quelconque des revendications 1 à 3, **caractérisé en ce qu'**il présente des moyens (16A,16B,19A,19B,19C) assurant un passage d'air comprimé (FS) provenant du compresseur (1) dans la ou les préchambres (3), lesdits moyens (16A,16B,19A,19B,19C) étant adaptés pour que le rapport flux d'air comprimé provenant du compresseur introduit dans la ou les préchambres/flux d'air comprimé provenant du compresseur introduit dans la ou les chambres est inférieur à 1/5, avantageusement inférieur à 1/8, de préférence inférieur à 1/10.

5. Turboréacteur selon l'une quelconque des revendications précédentes, **caractérisé en ce que** les moyens (7), faisant avantageusement partie de la ou les préchambres, pour amener les gaz de combustion de la ou les préchambres (3) dans la ou les chambres de combustion (2) comportent ou forment des moyens (16,16A, 16B, 18) divisant le flux d'air comprimé provenant du compresseur en un premier flux (FP) et en un deuxième flux (FS), ledit deuxième flux (FS) ayant un débit inférieur au premier flux (FP), et **en ce qu'**il comporte des moyens (16B,19B,19C) pour amener ledit deuxième flux (FS) ou une partie de celui-ci dans la ou les préchambres (3) et/ou dans un ou des moyens (7) amenant les gaz de combustion de la ou les préchambres (3) vers la ou les chambres de combustion (2).

6. Turboréacteur selon la revendication précédente, **caractérisé en ce que** le moyen (16B,19B,19C) amenant de l'air comprimé dans la ou les préchambres (3) est adapté pour que le rapport deuxième flux (FS)/premier flux (FP) est inférieur à 1 : 5, de façon avantageuse inférieur à 1 : 8, de préférence inférieur à 1 : 10.

7. Turboréacteur suivant la revendication 1 et l'une des revendications 5 et 6 **caractérisé en ce que** les moyens (19A) assurant un passage de gaz de la chambre (2) vers la ou les préchambres (3) sont agencés pour ne pas être situés dans le sillage ou prolongement du flux de gaz sortant du moyen (7) guidant les gaz de la ou les préchambres (3) dans la ou les chambres de combustion (2).

8. Turboréacteur suivant l'une quelconque des revendications précédentes, **caractérisé en ce que** le compresseur (1) comporte un stator (11) au moins partiellement rotatif, en particulier au moins partiellement contrarotatif par rapport au rotor (10), éventuellement solidaire d'une soufflante extérieure ou du rotor d'un compresseur auxiliaire extérieur.

9. Turboréacteur suivant l'une quelconque des revendications précédentes, **caractérisé en que** le compresseur comporte un stator (11) muni d'aubes (110) et un rotor (10) muni d'aubes (100), le corps du rotor ou du stator comprenant une couche (200) en matière thermoplastique ou est réalisé en matière thermoplastique dans laquelle sont engagées les bases d'aubes réalisées en une matière conductrice de la chaleur.

10. Turboréacteur suivant l'une quelconque des revendications précédentes, **caractérisé en ce que** la ou les préchambres (3) et/ou son moyen (7) guidant les gaz de combustion de la ou les préchambres (3) vers la ou les chambres de combustion (2) comportent en tout ou partie au moins un revêtement contenant au moins un catalyseur de combustion.

11. Turboréacteur suivant la revendication 1, **caractérisé en ce qu'**il comprend une paroi (16) de la préchambre de combustion (3) faisant face au compresseur, ladite paroi présentant une couronne extérieure découpée au niveau de la chambre de combustion pour former des dents adjacentes (16A), deux dents adjacentes étant séparées entre elles par un passage 17 pour une partie du flux principal (FP) vers la chambre de combustion, **en ce que** la tranche de la paroi (16) est prolongée vers la turbine (6) par un capotage ou profilé (18) suivant sensiblement le contour extérieur (C) de la paroi et des dents (16A), et **en ce que** les dents (16A) et/ou le profilé (18) présentent une ou des ouvertures (16B,19B) permettant un passage d'air comprimé du compresseur (1) dans le moyen (7) d'amenée des gaz de combustion de la préchambre (3) dans la, les ou des chambres de combustion (2).

12. Procédé pour placer des aubes réalisées en matière appropriée conductrice de la chaleur sur un stator et/ou un rotor du turboréacteur de la revendication 9, ce stator et/ou rotor étant muni d'une couche en matière thermoplastique ou réalisé en matière thermoplastique, dans lequel on chauffe au moins l'extrémité de l'aube à insérer dans la matière plastique à une température supérieure à la température de ramollissement, de préférence supérieure à la température de fusion de la matière thermoplastique, et on exerce un effort de pression entre l'aube et la matière thermoplastique pour que l'extrémité de l'aube pénètre dans la matière thermoplastique.

13. Procédé suivant la revendication 12, dans lequel on chauffe l'extrémité de la pièce à une température de 10 à 50°C supérieure à la température de fusion de la matière thermoplastique, mais à une température inférieure à la température de carbonisation et/ou pendant une période inférieure au temps de carbonisation.

14. Procédé suivant la revendication 12 ou 13, dans lequel on forme dans la matière thermoplastique des cavités ou des gorges ou des trous aux endroits où une extrémité d'une aube doit être insérée.

15. Procédé suivant la revendication 14, dans lequel les cavités, gorges ou trous sont adaptés notamment pour recevoir de la matière thermoplastique ramollie ou en fusion, lors de la pénétration de l'aube dans la matière thermoplastique.

## Claims

1. A turbojet engine comprising a compressor (1) drawing and compressing air in order to form at least one main stream (FP) of compressed air, one or a plurality of combustion chambers (2), and with at least one turbine (6) receiving the combustion gases from the at least one combustion chamber, **characterized in that** the turbojet engine includes a combustion prechamber (3) including one or several means for supplying an oxidizing medium and a fuel (4, 5), and a means (7) for directing the combustion gases from the prechamber or prechambers into one or a plurality of combustion chambers, as well as a means (18) for directing at least a portion of the main stream (FP) of compressed air from the compressor (1) in one, several, or each of the plurality of combustion chambers, said means (18) being arranged in relation to the means (7) for supplying the combustion gases from the prechamber or prechambers (3) in one, several or each of the plurality of combustion chambers (2) so that at least a portion of the main stream (FP) of compressed air from the compressor (1) which is guided into one, several or each of the plurality of combustion chambers (2) creates an aspiration of the combustion gases from the prechamber or prechambers for obtaining in said combustion chamber (2), a complementary, advantageously substantially complete combustion of the fuel which was not burnt in the prechamber or prechambers (3), such aspiration being advantageously combined with a mixing of the combustion gases with a portion of the main stream (FP) of compressed air in one, several or each of the plurality of combustion chambers (2),
**characterized in that** it has means (19A) ensuring a passage for the gas from the chamber or chambers (2) into the prechamber or prechambers (3), said means (19A) being arranged so that the gases from the chamber or chambers (2) flow into the prechamber or prechambers (3) between the fuel supply means (4) in the prechamber or prechambers (3) and the means (7) which form advantageously part of the prechamber or prechambers and which direct the combustion gases from the prechamber or prechambers (3) into the combustion chamber or chambers (2), and the means (19B, 19C) for ensuring a passage of compressed air from the compressor directly into the prechamber or prechambers, in particular into a region of the prechamber or prechambers which is adjacent to the fuel supply means.

2. A turbojet engine according to claim 1, **characterized in that** the compressor and/or the means for directing at least a portion of the main stream of compressed air from the compressor into the combustion chamber or chambers are arranged to ensure for the portion of the main stream entering the chamber a speed which is at least higher than the speed of the gases flowing out of the prechamber or prechambers, advantageously at least two times as high as the speed of the gases flowing out of the prechamber or prechambers, preferably at least five times as high as the speed of the gases flowing out of the prechamber or prechambers and in order to ensure that the prechamber or prechambers is/are in depression at least in relation to the chamber or chambers, preferably in relation to the chamber or chambers and its surroundings.

3. A turbojet engine according to claim 1, **characterized in that**, in relation to the position of the means (7) for directing the combustion gases from the prechamber or prechambers (3) into the combustion chamber or chambers(2), the means for supplying fuel and oxidizing medium (4, 5) in the prechamber or prechambers (3) are located closer to the turbine (6) of the turbojet engine or are spaced a longer distance from the compressor (1).

4. A turbojet engine according to anyone of claims 1 to 3, **characterized in that** it has means (16A, 16B, 19A, 19B, 19C) ensuring a passage for compressed air (FS) flowing from the compressor (1) into the prechamber or prechambers (3), said means (16A, 16B, 19A, 19B, 19C) being adapted so that the ratio between the stream of compressed air flowing from the compressor and into the prechamber or prechambers / the stream of compressed air flowing from the compressor and into the chamber or chambers is smaller than 1/5, advantageously smaller than 1/8, preferably smaller than 1/10.

5. A turbojet engine according to anyone of preceding claims, **characterized in that** the means (7) forming advantageously part of the prechamber or prechambers, for directing the combustion gases of the prechamber or prechambers (3) in the combustion chamber or chambers (2) include or form means (16, 16A, 16B, 18) dividing the stream of compressed air flowing from the compressor in a first stream (FP) and in a second stream (FS), said second stream (FS) having a lower flow rate than the first stream (FP), and **in that** it includes means (16B, 19B, 19C) for directing said second stream (FS) or a portion of this stream in the prechamber or prechambers (3) and/or in one or a plurality of means (7) for directing the combustion gases from the prechamber or prechambers (3) into the combustion chamber or chambers (2).

6. A turbojet engine according to preceding claim, **characterized in that** the means (16B, 19B, 19C) for directing compressed air in the prechamber or prechambers (3) is adapted so that the ratio second stream (FS) / first stream (FP) is smaller than 1:5, advantageously smaller than 1:8, preferably smaller than 1:10.

7. A turbojet engine according to claim 1 and one of claims 5 and 6, **characterized in that** the means (19A) ensuring a passage for the gases from the chamber (2) into the prechamber or prechambers (3) are arranged such as not to be located in the wake or extension of the stream of gases leaving the means (7) for guiding the gases from the prechamber or prechambers (3) into the combustion chamber or chambers (2).

8. A turbojet engine according to anyone of preceding claims, **characterized in that** the compressor (1) includes a stator (11) which is at least partially rotatable, in particular at least partially contrarotatable in relation to the rotor (10), possibly fixedly attached to an external turbofan or the rotor of an external auxiliary compressor.

9. A turbojet engine according to anyone of preceding claims, **characterized in that** the compressor includes a stator (11) provided with blades (110) and a rotor (10) provided with blades (100), the body of the rotor or the stator comprising a layer (200) of thermoplastic material or being made of a thermoplastic material in which the blade bases made of a heat conductive material are embedded.

10. A turbojet engine according to anyone of preceding claims, **characterized in that** the prechamber or prechambers (3) and/or its means (7) for guiding the combustion gases from the prechamber or prechambers (3) into the combustion chamber or chambers (2) include wholly or partially at least one coating containing at least one combustion catalyst.

11. A turbojet engine according to claim 1, **characterized in that** it comprises a wall (16) of the prechamber of combustion (3) facing the compressor, said wall having an external edge shaped in the vicinity of the combustion chamber so as to form teeth (16A), two adjacent teeth being separated by a passage (17) for a portion of the main stream (FP) to the combustion chamber, **in that** the edge of the wall (16) is extended towards the turbine (6) by a cap or profile (18) following substantially the form of the external edge (C) of the wall and teeth (16A), and **in that** the teeth (16A) and/or the profile (18) have one or several openings (16B,19) allowing a passage of compressed air from the compressor (1) in the means (7) for directing combustion gases from the prechamber (3) into the combustion chamber, several combustion chmber or each combustion chambers (2).

12. A method for placing blades made of a heat-conductive material on a stator and/or a rotor of the turbojet engine of claim 9, such stator and/or rotor being provided with a layer of a thermoplastic material or made of a thermoplastic material, wherein at least the end of the blade to be inserted in the plastic material is heated at a temperature higher than the softening temperature, preferably higher than the melting temperature of the thermoplastic material, and one a pressure strain is exerted between the blade and the thermoplastic material so that the end of the blade penetrates into the thermoplastic material.

13. A method according to claim 12, wherein the end of the piece is heated at a temperature which is 10 to 50° C higher than the melting temperature of the thermoplastic material, but at a temperature wich is lower than the carbonization temperature and/or during a period which is shorter than the carbonization time.

14. A method according to claim 12 or 13, wherein cavities or grooves or holes are formed in the thermoplastic material at the locations where an end of a blade must be inserted.

15. A method according to claim 14, wherein the cavities, grooves or holes are adapted particularly for receiving softened or melted thermoplastic material when the blade penetrates into the thermoplastic material.

## Patentansprüche

1. Turboluftstrahltriebwerk, umfassend einen Kompressor (1), der Luft auf solche Weise ansaugt und komprimiert, dass wenigstens ein Hauptstrom (FP) von komprimierter Luft gebildet wird, eine Brennkammer oder Brennkammern (2), und wenigstens eine Turbine (6), welche die Verbrennungsgase von der Brennkammer erhält, wobei das Turboluftstrahltriebwerk eine Verbrennungs-Vorkammer oder Verbrennungs-Vorkammern (3) umfasst, die ein Mittel oder Mittel zur Zuführung eines Brandförderers und eines Treibstoffs (4, 5) umfasst/umfassen, und ein Mittel (7), um die Verbrennungsgase von der Vorkammer oder den Vorkammern in eine Brennkammer oder in Brennkammern zu führen, sowie ein Mittel (18) zum Lenken wenigstens eines Teils des Hauptstroms (FP) von vom Kompressor (1) kommender komprimierter Luft in die Brennkammer, in Brennkammern oder in die Brennkammern, wobei das Mittel (18) in Bezug auf das Mittel (7) zur Zuführung der Verbrennungsgase aus der Vorkammer oder den Vorkammern (3) in die Brennkammer, in Brennkammern oder in die Brennkammern (2) dazu eingerichtet ist, so dass wenigstens ein Teil des Haupstroms (FP) von vom Kompressor (1) kommender und in die Brennkammer, in Brennkammern oder in die Brennkammern (2) gelenkter komprimierter Luft ein Ansaugen der Verbrennungsgase aus der Vorkammer oder den Vorkammern erzeugt, um in der Brennkammer oder den Brennkammern (2) eine ergänzende, bevorzugt im Wesentlichen vollständige, Verbrennung des Treibstoffs sicherzustellen, der in der Vorkammer oder den Vorkammern (3) nicht verbrannt ist, wobei diese Ansaugung bevorzugt mit einer Mischung der Verbrennungsgase mit einem Teil des Hauptstroms (FP) von komprimierter Luft in der Brennkammer, in Brennkammern oder in den Brennkammern (2) kombiniert ist,
**dadurch gekennzeichnet, dass** es Mittel (19A) aufweist, die einen Durchfluss von Gas aus der Kammer oder den Kammern (2) zu der Vorkammer oder den Vorkammern (3) sicherstellen, wobei die Mittel (19A) dazu eingerichtet sind, dass Gase aus der Kammer oder den Kammern (2) in die Vorkammer oder die Vorkammern (3) hereinfließen, und zwar zwischen dem Mittel zur Zuführung von Treibstoff (4) in die Vorkammer oder die Vorkammern (3) und den Mitteln (7), die die Verbrannungsgase aus der Vorkammer oder den Vorkammern (3) in die Brennkammer oder die Brennkammern (2) zuführen und die vorteilhafterweise Teil der Vorkammer oder der Vorkammern sind, und Mitteln (19B, 19C), die einen Durchfluss von komprimierter Luft von dem Kompressor direkt zu der Vorkammer oder den Vorkammern sicherstellen, insbesondere zu einem Teil der Vorkammer oder der Vorkammern, die dem Mittel zur Zuführung von Treibstoff benachbart ist.

2. Turboluftstrahltriebwerk nach Anspruch 1,
**dadurch gekennzeichnet, dass** der Kompressor und/oder das Mittel zum Lenken wenigstens eines Teils des Hauptstroms von vom Kompressor kommender, komprimierter Luft in die Brennkammer oder die Brennkammern dazu eingerichtet sind, um eine Geschwindigkeit für den Teil des in die Kammer oder die Kammern eingeleiteten Hauptstroms sicherzustellen, die größer ist, als die Geschwindigkeit der Gase, die aus der Vorkammer oder den Vorkammern austreten, bevorzugt wenigstens zweimal größer als die Geschwindigkeit der Gase, die aus der Vorkammer oder den Vorkammern austreten, vorzugsweise wenigstens fünfmal größer als die Geschwindigkeit der Gase, die aus der Vorkammer oder den Vorkammern austreten, und um eine Einstellung eines Unterdrucks der Vorkammer oder der Vorkammern in Bezug auf wenigstens die Kammer oder die Kammern sicherzustellen, bevorzugt in Bezug auf die Kammer oder die Kammern und ihre Umgebung.

3. Turboluftstrahltriebwerk nach Anspruch 1,
**dadurch gekennzeichnet, dass** in Bezug auf die Position des Mittels (7) zur Zuführung der Verbrennungsgase aus der Vorkammer oder den Vorkammern (3) zu der Brennkammer oder den Brennkammern (2), die Mittel zur Zuführung von Treibstoff und Brandförderer (4,5) in die Vorkammer oder die Vorkammern (3) näher an der Turbine (6) des Turboluftstrahltriebwerks oder weiter entfernt vom Kompressor (1) sind.

4. Turboluftstrahltriebwerk nach einem der Ansprüche 1 bis 3,
**dadurch gekennzeichnet, dass** es Mittel (16A, 16B, 19A, 19B, 19C) aufweist, die einen Durchfluss von vom Kompressor (1) kommender komprimierter Luft (FS) in die Vorkammer oder die Vorkammern (3) sicherstellen, wobei die Mittel (16A, 16B, 19A, 19B, 19C) dazu angepasst sind, dass das Verhältnis von Strom vom Kompressor kommender und in die Vorkammer oder die Vorkammern eingeleiteter, komprimierter Luft zu Strom vom Kompressor kommender und in die Kammer oder in die Kammern eingeleiteter, komprimierter Luft unterhalb von 1/5 liegt, vorzugsweise unterhalb von 1/8, bevorzugt unterhalb von 1/10.

5. Turboluftstrahltriebwerk nach einem der vorhergehenden Ansprüche,
**dadurch gekennzeichnet, dass** die vorzugsweise einen Teil der Vorkammer oder der Vorkammern bildenden Mittel (7) zum Zuführen der Verbrennungsgase aus der Vorkammer oder den Vorkammern (3) in die Brennkammer oder die Brennkammern (2) Mittel (16, 16A, 16B, 18) umfassen oder bilden, welche den Strom von vom Kompressor kommender, komprimierter Luft in einen ersten Strom (FP) und in einen zweiten Strom (FS) aufteilen, wobei der zweite Strom (FS) einen Durchsatz aufweist, der kleiner ist, als der erste Strom, und dass es Mittel (16B, 19B, 19C) zum Führen des zweiten Stroms (FS) oder eines Teils davon in die Vorkammer oder die Vorkammern (3) und/oder in ein Mittel oder in Mittel (7) umfasst, welches oder welche die Verbrennungsgase aus der Vorkammer oder den Vorkammern (3) zu der Brennkammer oder den Brennkammern (2) führt/führen.

6. Turboluftstrahltriebwerk nach dem vorhergehenden Anspruch,
**dadurch gekennzeichnet, dass** das Mittel (16B, 19B, 19C), welches komprimierte Luft in die Vorkammer oder die Vorkammern (3) führt, dazu angepasst ist, dass das Verhältnis von zweitem Strom (FS) zu erstem Strom (FP) kleiner als 1:5 ist, vorzugsweise kleiner als 1:8, bevorzugt kleiner als 1:10.

7. Turboluftstrahltriebwerk nach Anspruch 1 und einem der Ansprüche 5 und 6,
**dadurch gekennzeichnet, dass** die Mittel (19A), welche einen Durchfluss von Gas aus der Kammer (2) zur der Vorkammer oder den Vorkammern (3) sicherstellen, dazu eingerichtet sind, nicht im Nachlauf oder Verlängerung des Gasstroms zu liegen, der aus dem Mittel (7) heraustritt, das die Gase aus der Vorkammer oder den Vorkammern (3) in die Brennkammer oder die Brennkammern (2) führt.

8. Turboluftstrahltriebwerk nach einem der vorhergehenden Ansprüche,
**dadurch gekennzeichnet, dass** der Kompressor (1) einen Stator (11) umfasst, der wenigstens teilweise drehbar, insbesondere wenigstens teilweise gegenläufig drehbar in Bezug auf den Rotor (10) ist, möglicherweise fest verbunden mit einem äußeren Gebläse oder dem Rotor eines äußeren Hilfskompressors.

9. Turboluftstrahltriebwerk nach einem der vorhergehenden Ansprüche,
**dadurch gekennzeichnet, dass** der Kompressor einen mit Schaufeln (110) versehenen Stator (11) und einen mit Schaufeln (100) versehenen Rotor (10) umfasst, wobei der Körper des Rotors oder des Stators eine Schicht (200) aus einem thermoplastischen Material umfasst oder aus einem thermoplastischen Material gefertigt ist, in welches die Basen von Schaufeln eingreifen, die aus einem wärmeleitenden Material gefertigt sind.

10. Turboluftstrahltriebwerk nach einem der vorhergehenden Ansprüche,
**dadurch gekennzeichnet, dass** die Vorkammer oder die Vorkammern (3) und/oder ihr Mittel (7), welches die Verbrennungsgase aus der Vorkammer oder den Vorkammern (3) zu der Brennkammer oder den Brennkammern (2) führt, ganz oder wenigstens teilweise eine Verkleidung aufweisen, die wenigstens einen Verbrennungskatalysator enthält.

11. Turboluftstrahltriebwerk nach Anspruch 1,
**dadurch gekennzeichnet, dass** es eine Wand (16) der Verbrennungs-Vorkammer (3) umfasst, die dem Kompressor gegenüber liegt, wobei die Wand eine äußere Krone aufweist, die auf Höhe der Brennkammer ausgeschnitten ist, um benachbarte Zähne (16A) zu bilden, wobei zwei benachbarte Zähne voneinander durch eine Durchgang (17) für einen Teil des Hauptstroms (FP) zu der Brennkammer getrennt sind,
dass der Abschnitt der Wand (16) zur Turbine (6) durch eine Abdeckung oder ein Profil (18) verlängert ist, welches im Wesentlichen der äußeren Kontur (C) der Wand und der Zähne (16A) folgt,
und dass die Zähne (16A) und/oder das Profil (18) eine Öffnung oder Öffnungen (16B, 19B) aufweisen, die einen Durchfluss von komprimierter Luft vom Kompressor (1) in das Mittel (7) zur Zuführung der Verbrennungsgase aus der Vorkammer (3) in die Brennkammer, die Brennkammern oder Brennkammern (2) erlauben.

12. Verfahren zum Anbringen von aus einem geeigneten, wärmeleitenden Material gefertigten Schaufeln auf einen Stator und/oder einen Rotor des Turboluftstrahltriebwerks gemäß Anspruch 9, wobei der Stator und/oder Rotor mit einer Schicht aus einem thermoplastischen Material versehen oder aus einem thermoplastischen Material gefertigt ist, wobei wenigstens das Ende der Schaufel, welches in das plastische Material einzuführen ist, auf eine Temperatur erhitzt wird, die größer ist als die Erweichungstemperatur, vorzugsweise größer als die Schmelztemperatur des thermoplastischen Materials, und wobei eine Druckkraft zwischen der Schaufel und dem thermoplastischen Material ausgeübt wird, damit das Ende der Schaufel in das thermoplastische Material eindringt.

13. Verfahren nach Anspruch 12, wobei das Ende des Stücks auf eine Temperatur von 10 bis 50°C oberhalb der Schmelztemperatur des thermoplastischen Materials erhitzt wird, aber auf eine Temperatur, die kleiner ist als die Verkohlungstemperatur und/oder während einer Dauer, die kleiner als die Verkohlungszeit ist.

14. Verfahren nach Anspruch 12 oder 13, wobei in dem thermoplastischen Material Hohlräume oder Vertiefungen oder Löcher an den Orten ausgebildet sind, wo ein Ende einer Schaufel eingesteckt werden soll.

15. Verfahren nach Anspruch 14, wobei die Hohlräume, Vertiefungen oder Löcher insbesondere dazu angepasst sind, um erweichtes oder geschmolzenes thermoplastisches Material beim Eindringen der Schaufel in das thermoplastische Material aufzunehmen.
